Europäisches Patentamt

European Patent Office

Office européen des brevets

(11) Numéro de publication : **0 635 949 A1**

(12) # DEMANDE DE BREVET EUROPEEN

(21) Numéro de dépôt : **94401645.0**

(51) Int. Cl.⁶ : **H04B 7/005**

(22) Date de dépôt : **18.07.94**

(30) Priorité : **20.07.93 FR 9308874**

(43) Date de publication de la demande :
**25.01.95 Bulletin 95/04**

(84) Etats contractants désignés :
**AT BE DE DK ES FR GB IT NL SE**

(71) Demandeur : **ALCATEL MOBILE
COMMUNICATION FRANCE
15, rue de la Baume
F-75008 Paris (FR)**
(84) **FR**

(71) Demandeur : **ALCATEL N.V.
Strawinskylaan 341,
(World Trade Center)
NL-1077 XX Amsterdam (NL)**
(84) **BE DE DK ES GB IT NL SE AT**

(72) Inventeur : **Mourot, Christophe
36, rue Paul-Bert
F-92600 Asnières (FR)**
Inventeur : **Kumar, Vinod
15, rue Poliveau
F-75005 Paris (FR)**
Inventeur : **Dany, Jean-Claude, c/o SUPELEC
Plateau du Moulon
F-91190 Gif-sur-Yvette (FR)**
Inventeur : **Wautier, Armelle, c/o SUPELEC
Plateau du Moulon
F-91190 Gif-sur-Yvette (FR)**

(74) Mandataire : **Renaud-Goud, Thierry et al
c/o SOSPI,
14-16, rue de la Baume
F-75008 Paris (FR)**

(54) **Procédé pour déterminer la longueur optimale d'un bloc de données dans un système de communication à accès multiple à répartition dans le temps (AMRT).**

(57) On réalise une estimation de la réponse impulsionnelle du canal de communication à partir de symboles reçus de la séquence de référence (SR), on associe à chaque séquence de données (D', D) une erreur quadratique moyenne d'estimation dont on détermine un encadrement par deux fonctions limites respectivement inférieure et supérieure dépendant notamment de la longueur ($n_s$) de cette séquence de données (D) et de la longueur (P) de la séquence de référence (SR), et on détermine à partir desdites fonctions limites inférieure et supérieure un encadrement de la longueur optimale ($n_{opt}$) de ladite séquence de données (D).

Le procédé comprend également une optimisation de la longueur (P) de la séquence de référence (SR).

Utilisation en télécommunication.

FIG_1

La présente invention concerne un procédé pour déterminer la longueur optimale d'un bloc de données en réception dans un système de communication à accès multiple à répartition dans le temps (AMRT).

Dans un système de communication à accès multiple à répartition dans le temps (AMRT), la structure de signal est organisée en intervalles de temps et les dispersions temporelles existant dans des canaux multivoies, lorsqu'elles sont plus grandes que la période de symbole conduisent à des interférences inter-symboles et nécessitent alors l'utilisation d'un égaliseur.

A chaque intervalle de temps correspond un bloc de données comprenant des symboles de données d'information et une séquence d'apprentissage connue a priori du récepteur. La séquence d'apprentissage est généralement placée au milieu du bloc de données afin de minimiser l'effet des fluctuations de canal que le récepteur doit prendre en compte. Un bloc de données comprend généralement des symboles de début, des symboles de fin, des symboles de données et une séquence d'apprentissage insérée au milieu de ces données. Le dimensionnement d'un bloc de données résulte d'un compromis entre :
- les besoins du service, à savoir le nombre de symboles de données à transmettre par bloc ;
- le taux de variation du canal de communication; et
- l'efficacité requise de la voie radio, qui est définie par la valeur maximale du rapport du nombre de données sur la taille du bloc.

Pour corriger l'interférence entre symboles dans un récepteur, on utilise un égaliseur qui, pour fonctionner correctement, doit connaître la réponse impulsionnelle du canal de transmission. A cette fin, des symboles particuliers émis dans la séquence d'apprentissage sont des symboles connus, par opposition aux symboles de données qui font l'objet de la transmission et qui, par hypothèse, ne sont pas connus du récepteur.

Une séquence d'apprentissage est généralement composée de K symboles précurseurs, P symboles de référence, et éventuellement de K symboles "post curseurs", où K est la longueur du canal de transmission qui se définit comme le nombre de durées-symboles équivalent à la différence du trajet le plus long et du trajet le plus court de ce canal, et $P \geq K+1$.

La séquence d'apprentissage est choisie en fonction des caractéristiques du canal de transmission et plus particulièrement en fonction de la longueur de ce canal.

Pour établir la réponse impulsionnelle du canal, on utilise dans le récepteur un dispositif d'estimation de canal qui génère une réplique de cette séquence d'apprentissage et la corrèle avec la séquence de symboles reçus correspondante. Le résultat de la corrélation est un jeu de coefficients $h_l$ où i varie de O à L, L étant la longueur du canal, ce jeu de coefficients étant prévu pour renseigner l'égaliseur. Le trajet le plus direct du canal est représenté par ho, tandis que les autres coefficients représentent les trajets plus longs qui produisent des interférences avec le premier.

Il est essentiel de dimensionner les séquences de données d'un bloc de façon à pouvoir concilier une efficacité suffisante ou spécifiée de la voie radio et une validité de l'estimation de la réponse impulsionnelle du canal pour tous les symboles de données y compris ceux situés aux deux extrémités du bloc et donc les plus éloignés de la séquence d'apprentissage.

Une première méthode de détermination de la longueur d'un bloc de données consiste à utiliser des résultats de simulation tels que ceux présentés dans l'article "An investigation of block-adaptive decision feedback equalization for frequency selective fading channels" (investigation d'égalisation adaptative de bloc à retour de décision pour canaux à fading sélectif en fréquence) de G.W. DAVIDSON,D.D.FALCONER et A.U.H. SHEIK, Canadian J.Elect. & Comp.Eng, Vol.13 No.3-4, 1988, qui divulgue des résultats de simulation pour un égaliseur à retour de décision mettant en évidence l'influence de la longueur de la séquence d'apprentissage sur les performances d'un récepteur.

Une seconde méthode de détermination de longueur optimale consiste à effectuer cette détermination à partir de résultats de mesures effectuées sur le terrain. Cette méthode présente l'inconvénient majeur d'être coûteuse et d'être dépendante de conditions d'environnement particulières.

Le but de la présente invention est de remédier à ces inconvénients en proposant un procédé pour déterminer la longueur optimale d'un bloc de données, qui permette de garantir une transmission des symboles d'information avec une maîtrise des erreurs d'estimation en réception en adaptant la longueur d'un bloc de données au comportement d'un canal variant dans le temps.

Ces objectifs sont atteints avec le procédé pour déterminer la longueur optimale d'un bloc de données transmis sur un canal de communication variant dans le temps au sein d'un système de communication à accès multiple à répartition dans le temps (AMRT), ce bloc de données comprenant une séquence d'apprentissage comportant une séquence de référence précédée de symboles précurseurs, et des symboles de données répartis en une première séquence de données et une seconde séquence de données transmises respectivement avant et après ladite séquence d'apprentissage, ce canal de communication présentant une réponse impulsionnelle de longueur finie.

Suivant l'invention, ce procédé est caractérisé en ce qu'il comprend une étape d'optimisation de la longueur d'une séquence de données dans laquelle on réalise une estimation de la réponse impulsionnelle du canal de communication à partir de symboles reçus de la séquence de référence, on associe à cette séquence de données une erreur quadratique moyenne d'estimation dont on détermine un encadrement par deux fonctions limites respectivement inférieure et supérieure dépendant notamment de la longueur de cette séquence de données et de la longueur de la séquence de référence, et on détermine à partir desdites fonctions limites inférieure et supérieure un encadrement de la longueur optimale de ladite séquence de données correspondant à une plage spécifiée d'erreur quadratique.

Ainsi, on dispose avec le procédé selon l'invention d'un outil de détermination de la longueur optimale des séquences de données d'un bloc qui utilise l'estimation de la réponse impulsionnelle du canal qui est de toute façon réalisée en réception à des fins d'égalisation. Le procédé selon l'invention peut donc être mis en oeuvre au niveau de la réception sans nécessiter l'apport d'autres données ou paramètres que ceux transmis au sein du bloc de données et l'algorithme correspondant peut être implémenté dans le processeur prévu pour le traitement en réception des blocs de données et notamment pour l'égalisation des données.

Selon un mode avantageux de mise en oeuvre du procédé selon l'invention, celui-ci comprend en outre une étape d'optimisation de la longueur de la séquence de référence dans laquelle on déduit des deux fonctions limites inférieure et supérieure encadrant l'erreur quadratique moyenne d'estimation, deux fonctions limites spécifiques inférieure et supérieure encadrant l'erreur quadratique moyenne d'estimation correspondant à la séquence de référence.

L'optimisation de la séquence de référence conduit à un dimensionnement raisonnable de la séquence d'apprentissage, ce qui contribue à minimiser l'influence des variations du canal pendant l'estimation et à optimiser l'efficacité d'utilisation de la voie radio.

D'autres particularités et avantages de l'invention apparaîtront encore dans la description ci-après. Aux dessins annexés donnés à titre d'exemples non limitatifs :

- la figure 1 illustre la structure d'un bloc de données et les principaux paramètres dimensionnels impliqués dans le procédé selon l'invention ;
- la figure 2 illustre un mode de détermination graphique de la longueur optimale d'une séquence de données avec le procédé selon l'invention ; et
- la figure 3 illustre un mode de détermination graphique de la longueur optimale de la séquence de référence.

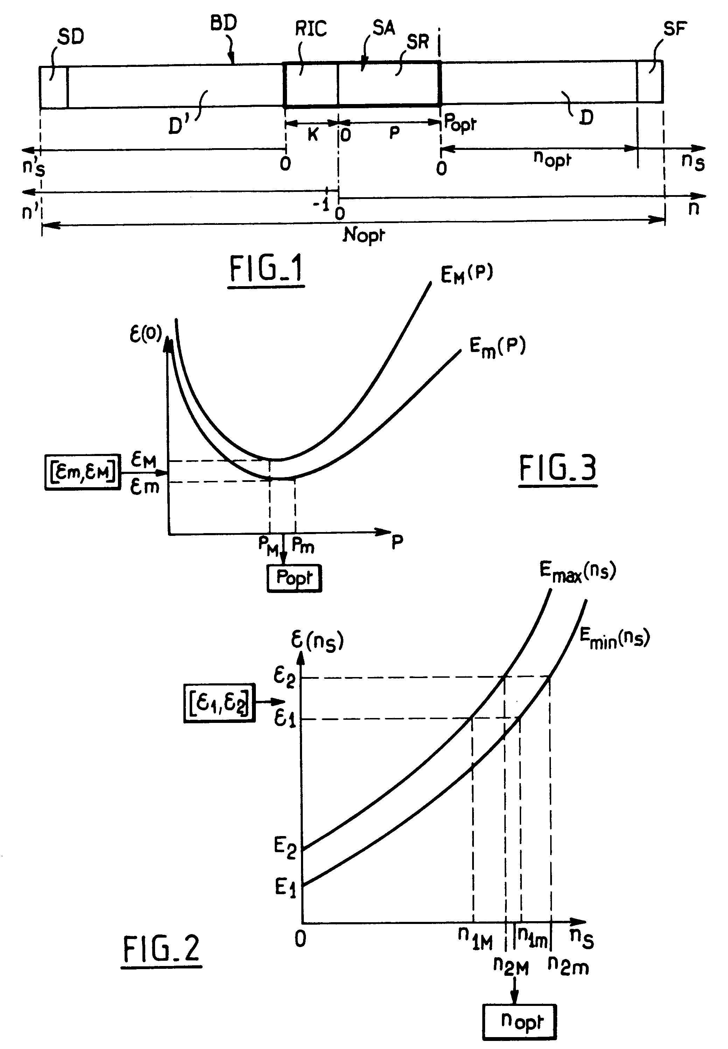

On va maintenant présenter quelques développements théoriques nécessaires pour comprendre le procédé selon l'invention, qui feront référence aux figures 1 à3.

Soient:

K : la longueur de la réponse impulsionnelle du canal RIC,

P : la longueur de la séquence de référence SR dans la séquence d'apprentissage SA,

L : la longueur de la séquence d'apprentissage SA,

H : le vecteur des coefficients de la réponse impulsionnelle réelle (ce vecteur n'est pas directement accessible en réception),

$\hat{H}$ : le vecteur des coefficients de la réponse impulsionnelle estimée du canal,

R : le vecteur des symboles reçus correspondant à la séquence de référence SR dans la séquence d'apprentissage SA,

B : le vecteur des échantillons de bruit auquel est soumis le canal de communication, où $b_i$ représente par exemple du bruit blanc gaussien de moyenne nulle et de variance $\frac{\sigma_N^2}{2}$.

$$H: \begin{vmatrix} h_0 \\ h_1 \\ \vdots \\ \vdots \\ \vdots \\ h_K \end{vmatrix} \qquad \hat{H}: \begin{vmatrix} \hat{h}_0 \\ \hat{h}_1 \\ \vdots \\ \vdots \\ \vdots \\ \hat{h}_K \end{vmatrix} \qquad R: \begin{vmatrix} r_{K+1} \\ r_{K+2} \\ \vdots \\ \vdots \\ r_L \end{vmatrix} \qquad B: \begin{vmatrix} b_{K+1} \\ b_{K+2} \\ \vdots \\ \vdots \\ b_L \end{vmatrix}$$

E : le vecteur des coefficients de l'erreur quadratique moyenne d'estimation, et

A : une matrice $(L-K) \times (K+1)$ complètement définie par les symboles d'apprentissage transmis $x_1, \ldots, x_L$, A est donnée par

EP 0 635 949 A1

$$A^H = \begin{bmatrix} x_{K+1}^{\bullet} & . & . & x_L^{\bullet} \\ x_K^{\bullet} & . & . & . \\ . & . & . & . \\ x_1^{\bullet} & . & . & x_{L-K}^{\bullet} \end{bmatrix}$$

où $.^H$ est l'opérateur Hermitien et $.^*$ est l'opérateur de conjugaison complexe. Bien que ce canal soit théoriquement de longueur infinie, on utilise usuellement une approximation par un filtre linéaire transversal de longueur finie K+1, comme l'enseigne par exemple l'ouvrage de J.G. PROKIS : "Digital communications" 2nde édition, Mac GRAW HILL 1989.

Le vecteur des symboles de référence reçus R et $x_1, ..., x_L$ sont liés par la relation suivante :

$$r_i = \sum_{k=0}^{K} h_k x_{i-k} + b_i \quad i = K+1, ..., L \tag{1}$$

Cette relation peut également être écrite sous la forme suivante :

$$R = AH + B \tag{2}$$

On a également :

$$E = R - A\hat{H} \tag{3}$$

On introduit

$$J = E^H E \tag{4}$$

On choisit H par une estimation au sens des moindres carrés. H minimise J et vérifie donc:

$$\frac{\partial J}{\partial H} = -2A^H R + 2A^H AH = 0 \tag{5}$$

Cette équation a une solution unique si et seulement si $L \geq 2K+1$, c'est à dire si et seulement si le nombre de colonnes dans $A^H$ est supérieur ou égal au nombre de lignes.

On aboutit alors, si la matrice $A^H A$ est inversible, à l'expression suivante:

$$\hat{H} = (A^H A)^{-1} A^H R \tag{6}$$

Les séquences à auto-corrélation-zéro et amplitude constante CAZAC et pseudo-CAZAC vérifient cette condition.

Dans le cas d'un canal variant dans le temps, on définit des fonctions $R_i(\Delta_t)$ de corrélation normalisées des différents trajets du canal. En plus des propriétés de corrélation de la séquence d'apprentissage, la valeur exacte des symboles qui la composent influence la précision d'estimation de la réponse impulsionnelle du canal. Cependant, pour une séquence CAZAC, en supposant que les différents trajets du canal et les échantillons de bruit sont indépendants statistiquement. Un canal variant dans le temps peut être modélisé par un filtre numérique transverse.

Les coefficients de la réponse impulsionnelle vérifient:

$$E[h_j(k)h_i * (l)] = 0 \text{ pour } i \neq j \quad \forall k, l \tag{7}$$

$$E[h_j(k)h_j * (l)] = \sigma_j^2 R_j((k-l)T_s) \quad \forall k, l \tag{8}$$

où:

Ts est période de transmission des symboles,

$\sigma_j^2$ est la puissance moyenne du jème trajet.

Dans la suite de la description et pour rendre la lecture de celle-ci plus aisée, on convient de remplacer $R(kT_s)$ par $R(k)$.

On suppose dans la suite que la séquence d'apprentissage est de type CAZAC et périodique de période P. On considère les symboles $u_0, ..., u_{P-1}$ de la séquence de référence qui sont émis sur le canal de communication. Pour faciliter les notations, on conviendra dans la suite que

$$u_{-i} = u_{P-i}, \quad i \in [1, P-L],$$
$$u_{i+P} = u_i, \quad i \in [0, P-1] \tag{9}$$

On suppose en outre que $|u_j| = 1$. On peut exprimer l'échantillon reçu sans bruit de la façon suivante:

4

$$y(n) = \sum_{k=0}^{K} u_{n-k} h_k(n) \quad \text{pour } n \in [0, P-1] \tag{10}$$

En l'absence de bruit, et selon l'équation (6), une estimation des coefficients de canal s'exprime ainsi :

$$\hat{h}_i = \frac{1}{P} \sum_{\lambda=1}^{P} \sum_{k=0}^{K} u_{\lambda-i-1}^{\bullet} u_{\lambda-k-1} h_k(\lambda-1) \quad \text{pour } i \in [0, K] \tag{11}$$

L'erreur quadratique d'estimation de coefficient est donnée par :

$$E\left[(\hat{h}_i - h_i(n))(\hat{h}_i - h_i(n))^{\bullet}\right] = E\left[\hat{h}_i \hat{h}_i^{\bullet}\right] - E\left[\hat{h}_i h_i^{\bullet}(n)\right] - E\left[\hat{h}_i^{\bullet} h_i(n)\right] + \sigma_i^2 \tag{12}$$

$$E\left[\hat{h}_i h_i^{\bullet}(n)\right]$$

peut être exprimée ainsi :

$$E\left[\hat{h}_i h_i^{\bullet}(n)\right] = \frac{1}{P} \sum_{\lambda=1}^{P} \sum_{k=0}^{K} u_{\lambda-i-1}^{\bullet} u_{\lambda-k-1} h_k(\lambda-1) h_i^{\bullet}(n) \tag{13}$$

A partir de l'équation (7), on en déduit que

$$E\left[\hat{h}_i h_i^{\bullet}(n)\right] = \frac{1}{P} \sum_{\lambda=1}^{P} |u_{\lambda-i-1}|^2 h_i(\lambda-1) h_i^{\bullet}(n) \tag{14}$$

et par conséquent,

$$E\left[\hat{h}_i h_i^{\bullet}(n)\right] = E\left[\hat{h}_i^{\bullet} h_i(n)\right] = \frac{1}{P} \sigma_i^2 \sum_{\lambda=1}^{P} R_i(\lambda-n-1) \tag{15}$$

$$E\left[\hat{h}_i \hat{h}_i^{\bullet}\right]$$

est défini par :

$$E\left[\hat{h}_i \hat{h}_i^{\bullet}\right] = \frac{1}{P^2} E\left(\sum_{\lambda=1}^{P} \sum_{\gamma=1}^{P} \sum_{k=0}^{K} \sum_{l=0}^{K} u_{\lambda-k-1} u_{\lambda-i-1}^{\bullet} u_{\gamma-l-1}^{\bullet} u_{\gamma-i-1} h_k(\lambda-1) h_l^{\bullet}(\gamma-1)\right) \tag{16}$$

Des équations (7) et (8), il s'ensuit que

$$E\left[\hat{h}_i \hat{h}_i^{\bullet}\right] = \frac{1}{P^2} \sum_{\lambda=1}^{P} \sum_{\gamma=1}^{P} \sum_{k=0}^{K} u_{\lambda-k-1} u_{\lambda-i-1}^{\bullet} u_{\gamma-k-1}^{\bullet} u_{\gamma-i-1} \sigma_k^2 R_k(\lambda-\gamma) \tag{17}$$

Pour obtenir une limite supérieure de

$$\sum_{i=0}^{K} E\left[h_i h_i^{\bullet}\right],$$

on peut utiliser une inégalité liant la longueur P de la séquence de référence et la longueur K de la réponse impulsionnelle du canal, imposée pour satisfaire l'unicité du vecteur d'estimation H:

$$P \geqq K + 1 \quad (18)$$

De cette inégalité, on déduit que :

$$\sum_{i=0}^{K} E\left[\hat{h}_i \hat{h}_i^{\bullet}\right] \leq \sum_{i=0}^{P-1} E\left[\hat{h}_i \hat{h}_i^{\bullet}\right] \qquad (19)$$

On obtient alors :

$$\sum_{i=0}^{K} E\left[\hat{h}_i \hat{h}_i^{\bullet}\right] \leq \frac{1}{P^2} \sum_{i=0}^{P-1} \sum_{\lambda=1}^{P} \sum_{\gamma=1}^{P} \sum_{k=0}^{K} u_{\lambda-k-1} u_{\lambda-i-1}^{\bullet} u_{\gamma-k-1}^{\bullet} u_{\gamma-i-} \sigma_k^2 R_k(\lambda-\gamma) \quad (20)$$

$$\leq \frac{1}{P^2} \sum_{\lambda=1}^{P} \sum_{\gamma=1}^{P} \sum_{k=0}^{K} u_{\lambda-k-1} u_{\gamma-k-1}^{\bullet} \sigma_k^2 R_k(\lambda-\gamma) \sum_{i=0}^{P-1} u_{\lambda-i-1}^{\bullet} u_{\gamma-i-1} \quad (21)$$

Comme la séquence de référence est supposée de type CAZAC, il s'en suit que :

$$\sum_{i=0}^{P-1} u_{\lambda-i-1}^{\bullet} u_{\gamma-i-1} = \begin{cases} 0 & \text{pour } \lambda \neq \gamma \\ P & \text{pour } \lambda = \gamma \end{cases} \qquad (22)$$

Par conséquent,

$$\sum_{i=0}^{K} E(\hat{h}_i \hat{h}_i^{\bullet}) \leq \frac{1}{P} \sum_{\lambda=1}^{P} \sum_{k=0}^{K} u_{\lambda-k-1} u_{\lambda-k-1}^{\bullet} \sigma_k^2 R_k(0) \qquad (23)$$

$$\leq \frac{1}{P} \sum_{k=0}^{K} \sigma_k^2 R_k(0) \sum_{\lambda=1}^{P} \left|u_{\lambda-k-1}\right|^2 \qquad (23.1)$$

$$\leq \frac{1}{P} \sum_{k=0}^{K} \sigma_k^2 R_k(0) P \qquad (23.2)$$

$$\leq \sum_{k=0}^{K} \sigma_k^2 \qquad (23.3)$$

$$\sum_{i=0}^{K} E(\hat{h}_i \hat{h}_i^{\cdot}) \leq \sigma^2 \qquad\qquad (24)$$

où

$$\sigma^2 = \sum_{k=0}^{K} \sigma_k^2 \qquad\qquad (25)$$

$\sigma^2$ représente la puissance moyenne du canal.

Il s'agit maintenant de déterminer une limite inférieure pour

$$\sum_{i=0}^{K} E(\hat{h}_i \hat{h}_i^{\cdot}) .$$

On introduit pour cela une estimée moyenne $\bar{h}_i$ des estimées des coefficients de canal avec un décalage cyclique de la même séquence d'apprentissage :

$$\bar{h}_i = \frac{1}{P^2} \sum_{n=0}^{P-1} \sum_{\lambda=1}^{P} \sum_{k=0}^{K} u_{\lambda-k-1+n} u_{\lambda-i-1+n}^{\cdot} h_k(\lambda-1) \qquad (26)$$

$$= \frac{1}{P} \sum_{\lambda=1}^{P} h_i(\lambda-1) \qquad (26.1)$$

On peut alors déduire une limite supérieure de l'inégalité suivante :

$$E\left[(\hat{h}_i - \bar{h}_i)(\hat{h}_i^{\cdot} - \bar{h}_i^{\cdot})\right] = E\left[\hat{h}_i \hat{h}_i^{\cdot}\right] - E\left[\hat{h}_i \bar{h}_i^{\cdot}\right] - E\left[\hat{h}_i^{\cdot} \bar{h}_i\right] + E\left[\bar{h}_i \bar{h}_i^{\cdot}\right] \geq 0 \quad (27)$$

Or,

$$E\left[\hat{h}_i \bar{h}_i^{*}\right] = E\left[\hat{h}_i^{*} \bar{h}_i\right] = \frac{1}{P^2} \sum_{\lambda=1}^{P} \sum_{\gamma=1}^{P} \sigma_i^2 R_i(\lambda-\gamma) \qquad (28)$$

$$E\left[\bar{h}_i \bar{h}_i^{\cdot}\right] = \frac{1}{P^2} \sum_{\lambda=1}^{P} \sum_{\gamma=1}^{P} \sigma_i^2 R_i(\lambda-\gamma) \qquad (29)$$

En substituant les équations (28) et (29) dans l'équation (27), on obtient :

$$E\left[\hat{h}_i \hat{h}_i^*\right] \geq \frac{1}{P^2} \sum_{\lambda=1}^{P} \sum_{\gamma=1}^{P} \sigma_i^2 R_i(\lambda - \gamma) \qquad (30)$$

On obtient finalement :

$$\sum_{i=0}^{K} E\left[(\hat{h}_i - h_i(n))(\hat{h}_i - h_i(n))^*\right] \leq \sum_{i=0}^{K} 2\sigma_i^2 (1 - \frac{1}{P} \sum_{\lambda=1}^{P} R_i(\lambda - n - 1)) \qquad (31)$$

$$(32) \Downarrow$$

$$\sum_{i=0}^{K} E\left[(\hat{h}_i - h_i(n))(\hat{h}_i - h_i(n))^*\right] \geq \sum_{i=0}^{K} \sigma_i^2 (1 - \frac{2}{P} \sum_{\lambda=1}^{P} R_i(\lambda - n - 1) + \frac{1}{P^2} \sum_{\lambda=1}^{P} \sum_{\gamma=1}^{P} R_i(\lambda - \gamma))$$

Il est alors utile d'effectuer le changement de variable suivant, en référence à la figure 2 :

$$n_s = n - P \quad (33)$$

$$\sum_{\lambda=1}^{P} R_i(\lambda - n - 1) = \sum_{\mu=1}^{P} R_i(-\mu - P - n) = \sum_{\mu=1}^{P} R_i(\mu + n_s) \qquad (34)$$

Pour la partie précédant la séquence d'apprentissage, si on introduit une nouvelle variable n'=-n-1, en référence à la figure 2,

$$n'_s = n' + K \quad (35)$$

$$\sum_{\lambda=1}^{P} R_i(\lambda - n - 1) = \sum_{\lambda=1}^{P} R_i(\lambda + n') = \sum_{\lambda=1}^{P} R_i(\lambda + n'_s + K) \qquad (36)$$

On va maintenant déterminer les bornes respectivement supérieure et inférieure de l'erreur d'estimation en fonction de la nouvelle variable $n_s$.

$$\sum_{i=0}^{K} E\left\|\hat{h}_i - h_i(n_s)\right\|^2 \leq \frac{(K+1)\sigma_n^2}{P} + \sum_{i=0}^{K} 2\sigma_i^2 \left[1 - \frac{1}{P} \sum_{\lambda=1}^{P} R_i(\lambda + n_s)\right] \qquad (37)$$

$$(38) \Downarrow$$

$$\sum_{i=0}^{K} E\left\|\hat{h}_i - h_i(n_s)\right\|^2 \geq \frac{(K+1)\sigma_n^2}{P} + \sum_{i=0}^{K} \sigma_i^2 \left[1 - \frac{2}{P} \sum_{\lambda=1}^{P} R_i(\lambda + n_s) + \frac{1}{P^2} \sum_{\lambda=1}^{P} \sum_{\gamma=1}^{P} R_i(\lambda - \gamma)\right]$$

où $\sigma_i^2$ est la puissance moyenne du ième trajet, $n_s$ correspond au premier symbole qui suit la séquence d'apprentissage dans le bloc.

Pour la séquence de données D précédant la séquence d'apprentissage, les inégalités (37) et (38) deviennent:

$$\sum_{i=0}^{K} E\left[\left\|\hat{h}_i - h_i(n',_s)\right\|^2\right] \leq \frac{(K+1)\sigma_n^2}{P} + \sum_{i=0}^{K} 2\sigma_i^2\left[1 - \frac{1}{P}\sum_{\lambda=1}^{P} R_i(\lambda + n',_s + K)\right] \quad (37')$$

$$(38') \Downarrow$$

$$\sum_{i=0}^{K} E\left[\left\|\hat{h}_i - h_i(n',_s)\right\|^2\right] \geq \frac{(K+1)\sigma_n^2}{P} + \sum_{i=0}^{K} \sigma_i^2\left[1 - \frac{2}{P}\sum_{\lambda=1}^{P} R_i(\lambda + n',_s + K) + \frac{1}{P^2}\sum_{\lambda=1}^{P}\sum_{\gamma=1}^{P} R_i(\lambda - \gamma)\right]$$

On suppose maintenant que le récepteur se déplace à une vitesse constante et que les trajets multiples dus à un grand nombre de réflexions ont une distribution d'angles d'arrivée uniformes. Les fonctions de corrélation normalisées $R_i(\Delta_t)$ sont alors supposées égales à $R(\Delta_t)$ qui est la transformée de Fourier du spectre Doppler classique et est donnée par :

$$R(\Delta_t) = J_o(2\pi f_d \Delta_t) \quad (39)$$

où $J_o$ est la fonction de Bessel du premier ordre et $f_d$ est l'écart de fréquence maximal dû à l'effet Doppler donné par :

$$f_d = \frac{f_0 v}{c} \quad (40)$$

où $f_0$ est la fréquence porteuse, $v$ est la vitesse du mobile et $c$ est la vitesse du son.

Ceci correspond au cas le plus défavorable pour un canal mobile variant dans le temps. Si $2\pi f_d T_s n_s$ est petit devant 1, on peut effectuer l'approximation suivante :

$$R(n_s T_s) \approx 1 - (\pi f_d T_s)^2 n_s^2 \quad (41)$$

Soit $\varepsilon(n_s)$ l'erreur d'estimation normalisée à la position symbole $n_s$, définie par :

$$\varepsilon(n_s) = \frac{1}{\sigma^2}\sum_{i=0}^{K} E\left[\left\|\hat{h}_i - h_i(n_s)\right\|^2\right] \quad (42)$$

où $\sigma^2$ est la puissance moyenne du canal, donnée par:

$$\sigma^2 = \sum_{i=0}^{K} \sigma_i^2 \quad (43)$$

Dans la suite, on considère une modulation à déplacement de phase à quatre états (MDP4). Le rapport $\frac{|s|^2 \sigma^2}{\sigma_n^2}$ peut être remplacé par le rapport signal à bruit $\frac{2E_b}{N_0}$ où Eb désigne l'énergie transmise par bit et $\frac{N_0}{2}$ la densité bilatérale de bruit blanc additif gaussien. Dans le cas présent, il y a deux bits par symbole, mais plus généralement, dans le cas d'une modulation à déplacement de phase à M états (MDP-M), il y a $Log_2 M$ bits par symbole.

Il est alors possible de définir des fonctions limites supérieure et inférieure pour la longueur optimale de la séquence de données.

$$\varepsilon(n_s) \leq \frac{k+1}{P} \cdot \frac{N_0}{2E_b} + 2(\pi f_d T_s)^2 \left(\frac{(P+1)(2P+1)}{6} + (P+1)n_s + n_s^2\right) = E_{max}(n_s) \quad (44)$$

$$\varepsilon(n_s) \geq \frac{K+1}{P} \cdot \frac{N_0}{2E_b} + 2(\pi f_d T_s)^2 \left(\frac{(P+1)^2}{4} + (P+1)n_s + n_s^2\right) = E_{min}(n_s) \quad (45)$$

Pour la séquence de données D' précédant la séquence d'apprentissage, on obtient de la même façon les fonctions limites suivantes:

$$\varepsilon(n'_s) \leq \frac{K+1}{P} \cdot \frac{N_0}{2E_b} + 2(\pi f_d T_s)^2 \left(\frac{(P+1)(2P+1)}{6} + (P+1)(n'_s + K) + (n'_s + K)^2\right) = E'_{max}(n'_s) \quad (44')$$

$$\varepsilon(n'_s) \geq \frac{K+1}{P} \cdot \frac{N_0}{2E_b} + 2(\pi f_d T_s)^2 \left(\frac{(P+1)^2}{4} + (P+1)(n'_s + K) + (n'_s + K)^2\right) = E'_{min}(n'_s) \quad (45')$$

La longueur optimale $n_{opt}$ d'un bloc, qui doit être choisie de sorte que l'erreur quadratique moyenne d'estimation correspondante soit dans une plage prédéterminée, dépend ainsi des paramètres suivants :
- la longueur K du canal,
- la longueur P de la séquence de référence,
- le rapport signal à bruit $E_b/2N_o$,
- l'écart de fréquence maximal $f_d$ dû à l'effet Doppler, et
- la période symbole $T_s$, qui est l'inverse du débit symbole.

Les deux fonctions limites précitées peuvent être représentées graphiquement sous la forme de deux courbes paraboliques P1, P2 qui coupent l'axe des abscisses en E1 et E2, en référence à la figure 2 :

$$A1 = \frac{K + 1}{P} \cdot \frac{N_0}{2E_b} + 2(\pi f_d T_s)^2 \frac{(P + 1)^2}{4} \quad (46)$$

$$A2 = \frac{K + 1}{P} \cdot \frac{N_0}{2E_b} + 2(\pi f_d T_s)^2 \frac{(P + 1)(2P + 1)}{6} \quad (47)$$

Seules les valeurs positives de $n_s$ sont étudiées, puisque $n_s$ représente une longueur, et est donc toujours positive ou nulle.

La détermination de la longueur optimale $n_{opt}$ peut ainsi être effectuée de manière graphique, en référence à la figure 2: on spécifie une plage $[\varepsilon_1, \varepsilon_2]$ pour $\varepsilon(n_s)$. On applique cette plage d'erreur aux deux fonctions limites inférieure et supérieure pour en déduire deux intervalles $[n_{1M}, n_{1m}]$ et $[n_{2M}, n_{2m}]$ correspondant respectivement à la borne inférieure $\varepsilon_1$ et à la borne supérieure $\varepsilon2$. L'intersection de ces deux intervalles fournit un intervalle résultant dans lequel on peut choisir une longueur optimale $n_{opt}$ de la séquence de données.

Une procédure analogue peut être appliquée pour déterminer un encadrement de la longueur optimale $n'_{opt}$ de la séquence de données D' précédant la séquence d'apprentissage.

On va maintenant expliquer un mode de détermination de la longueur optimale de la séquence de référence à partir des expressions de $E_{min}$ et de $E_{max}$ qui viennent d'être établies. il suffit de prendre $n_s$ égal à zéro dans ces expressions, puisque cela correspond à l'extrémité de la séquence de référence. On obtient alors les inégalités suivantes pour l'erreur quadratique moyenne d'estimation correspondant au symbole de la séquence de référence situé en $n_s=0$.

On définit ainsi deux nouvelles fonctions $E_m(P)$, $E_M(P)$ correspondant respectivement aux limites inférieure et supérieure de l'erreur quadratique moyenne d'estimation sur la séquence de référence, en fonction de la longueur de celle-ci :

$$E_m(P) = \frac{K + 1}{P} \cdot \frac{N_0}{2E_b} + 2(\pi f_d T_s)^2 \frac{(P + 1)^2}{4} \quad (48.1)$$

$$E_M(P) = \frac{K + 1}{P} \cdot \frac{N_0}{2E_b} + 2(\pi f_d T_s)^2 \frac{(P + 1)(2P + 1)}{6} \quad (48.2)$$

$$E_m(P) \leqq \varepsilon(0) \leqq E_M(P) \quad (48.3)$$

La séquence d'apprentissage doit être suffisamment longue pour estimer le canal ($P \geqq K+1$) mais aussi suffisamment courte pour minimiser l'influence des variations du canal pendant l'estimation. Une séquence trop longue a pour effet de dégrader les performances du récepteur. Les limites inférieure et supérieure de l'erreur quadratique moyenne sont des fonctions $E_m(P)$, $E_M(P)$ de la longueur P de la séquence de référence. La minimisation de la limite supérieure $E_M(P)$ de l'erreur quadratique moyenne E est obtenue pour une longueur $P_M$ qui a pour expression :

$$P_M = \sqrt[3]{\frac{3}{4}} \sqrt[3]{\frac{(k + 1)}{(\pi f_d T_s)^2} \frac{N_o}{2E_b}} \quad (49)$$

La minimisation de la limite inférieure $E_m(P)$ est obtenue pour une longueur $P_m$ qui a pour expression :

$$P_m = \sqrt[3]{\frac{(k + 1)}{(\pi f_d T_s)^2} \frac{N_o}{2E_b}} \quad (50)$$

Le choix de la longueur optimale $P_{opt}$ de la séquence de référence doit ainsi être effectué dans l'intervalle $[P_M, P_m]$ qui correspond à un intervalle $[\varepsilon_m, \varepsilon_M]$ d'erreur quadratique d'estimation minimale.

Avec le procédé selon l'invention, on peut ainsi choisir la longueur des séquences de données et de la séquence de référence, de façon à maintenir l'erreur quadratique moyenne d'estimation en dessous d'un seuil d'erreur prédéterminé ou dans une plage prédéterminée.

Le procédé selon l'invention peut par exemple être matérialisé sous la forme d'un algorithme implémenté dans un processeur implanté dans un récepteur radio mobile et assurant notamment des fonctions d'estimation et d'égalisation. il peut également conduire à la réalisation de tables de vérité fournissant des indications de longueur optimale préalablement stockées dans un support mémoire en fonction de paramètres d'entrée fournis par exemple par un estimateur.

Bien sûr, l'invention n'est pas limitée aux exemples qui viennent d'être décrits et de nombreux aménagements peuvent être apportés à ces exemples sans sortir du cadre de l'invention.

**Revendications**

1. Procédé pour déterminer la longueur optimale ($N_{opt}$) d'un bloc de données (BD) transmis sur un canal de communication variant dans le temps au sein d'un système de communication à accès multiple à répartition dans le temps (AMRT), ce bloc de données (BD) comprenant une séquence d'apprentissage (SA) comportant une séquence de référence (SR) précédée de symboles précurseurs, et des symboles de données répartis en une première séquence de données (D') et une seconde séquence de données (D) transmises respectivement avant et après ladite séquence d'apprentissage (SA), ledit canal de communication présentant une réponse impulsionnelle de longueur finie (K), caractérisé en ce qu'il comprend une étape d'optimisation de la longueur ($n_s$, $n'_s$) de chaque séquence de données (D, D') dans laquelle on réalise une estimation de la réponse impulsionnelle du canal de communication à partir de symboles reçus (R) de la séquence de référence (SR), on associe à chaque séquence de données (D, D') une erreur quadratique moyenne d'estimation dont on détermine un encadrement par deux fonctions limites respectivement inférieure et supérieure ($E_{min}(n_s)$, $E_{max}(n_s)$; $E'_{min}(n_s)$, $E'_{max}(n_s)$) dépendant notamment de la longueur ($n_s$) de cette séquence de données et de la longueur de la séquence de référence, et on détermine à partir desdites fonctions limites inférieure et supérieure un encadrement de la longueur optimale ($n_{opt}$, $n'_{opt}$) de chaque séquence de données correspondant à une plage spécifiée d'erreur quadratique.

2. Procédé selon la revendication 1, caractérisé en ce qu'il comprend en outre une étape d'optimisation de la longueur de la séquence de référence (SR) dans laquelle on déduit des deux fonctions limites inférieure et supérieure encadrant l'erreur quadratique moyenne d'estimation, deux fonctions limites spécifiques inférieure et supérieure encadrant l'erreur quadratique moyenne d'estimation correspondant à la séquence de référence (SR).

3. Procédé selon l'une des revendications 1 ou 2, appliqué à des blocs de données comprenant des séquences de type à auto-corrélation-zéro et amplitude constante (CAZAC) ou pseudo-CAZAC, le bruit affectant le canal de communication étant approximé par un bruit blanc additif gaussien, caractérisé en ce que l'erreur quadratique moyenne d'estimation normalisée correspondant à la séquence de données (D) suivant la séquence de référence (SR) est bornée par les fonctions limites respectivement inférieure et supérieure ($E_{min}(n_s)$, $E_{max}(n_s)$) suivantes:

$$E_{min}(n_s) = \frac{K+1}{P} \cdot \frac{N_0}{2E_b} + 2(\pi f_d T_s)^2 \left( \frac{(P+1)^2}{4} + (P+1)n_s + n_s^2 \right)$$

$$E_{max}(n_s) = \frac{K+1}{P} \cdot \frac{N_0}{2E_b} + 2(\pi f_d T_s)^2 \left( \frac{(P+1)(2P+1)}{6} + (P+1)n_s + n_s^2 \right)$$

où :
- $n_s$ est la longueur de la séquence de données,
- K est la longueur du canal,
- P est la longueur de la séquence de référence (SR),
- Ts est la période symbole,
- No/2 est une densité bilatérale de bruit blanc additif gaussien,
- $E_b$ est l'énergie transmise par bit,
- $f_d$ est l'écart maximal de fréquence dû à l'effet Doppler,

et en ce que l'on détermine un encadrement [$n_{2M}$, $n_{1m}$] de la longueur optimale ($n_{opt}$) en appliquant aux deux fonctions limites inférieure et supérieure ($E_{min}(n_s)$, $E_{max}(n_s)$) une plage spécifiée [$\varepsilon_1$, $\varepsilon_2$] d'erreur quadratique.

4. Procédé selon l'une des revendications 1 à 3, appliqué à des blocs de données comprenant des séquences de type à auto-corrélation-zéro et amplitude constante (CAZAC) ou pseudo-CAZAC, le bruit affectant le canal de communication étant approximé par un bruit blanc additif gaussien, caractérisé en ce que l'erreur quadratique moyenne d'estimation normalisée correspondant à la séquence de données (D) précédant la séquence de référence (SR) est bornée par les fonctions limites respectivement inférieure et supérieure ($E'_{min}(n'_s)$, $E'_{max}(n'_s)$) suivantes :

$$E'_{min}(n'_s) = \frac{K + 1}{P} \cdot \frac{N_0}{2E_b} + 2(\pi f_d T_s)^2 \left(\frac{(P + 1)^2}{4} + (P + 1)(n'_s + K) + (n'_s + K)^2\right)$$

$$E'_{max}(n'_s) = \frac{K + 1}{P} \cdot \frac{N_0}{2E_b} + 2(\pi f_d T_s)^2 \left(\frac{(P + 1)(2P + 1)}{6} + (P + 1)(n'_s + K) + (n'_s + K)^2\right)$$

où:
- $n'_s$ est la longueur de la séquence de données précédant la séquence de référence,
- K est la longueur du canal,
- P est la longueur de la séquence de référence (SR),
- $T_s$ est la période symbole,
- No/2 est une densité bilatérale de bruit blanc additif gaussien,
- $E_b$ est l'énergie transmise par bit,
- $f_d$ est l'écart maximal de fréquence dû à l'effet Doppler,

et en ce que l'on détermine un encadrement de la longueur optimale ($n'_{opt}$) en appliquant aux deux fonctions limites inférieure et supérieure ($E'_{min}(n'_s)$, $E'_{max}(n'_s)$) une plage spécifiée [$\varepsilon'_1$, $\varepsilon'_2$] d'erreur quadratique.

5. Procédé selon les revendications 2 et 3, caractérisé en ce que dans l'étape d'optimisation de la longueur de la séquence de référence, l'erreur quadratique moyenne d'estimation normalisée est bornée par deux fonctions limites spécifiques respectivement inférieure et supérieure ($E_m(P)$, $E_M(P)$) suivantes :

$$E_m(P) = \frac{K + 1}{P} \cdot \frac{N_0}{2E_b} + 2(\pi f_d T_s)^2 \frac{(P + 1)^2}{4}$$

$$E_M(P) = \frac{K + 1}{P} \cdot \frac{N_0}{2E_b} + 2(\pi f_d T_s)^2 \frac{(P + 1)(2P + 1)}{6}$$

où:
- K est la longueur du canal,
- P est la longueur de la séquence de référence (SR),
- $T_s$ est la période symbole,
- No/2 est une densité bilatérale de bruit blanc additif gaussien,
- $E_b$ est l'énergie transmise par bit,
- $f_d$ est l'écart maximal de fréquence dû à l'effet Doppler.

6. Procédé selon la revendication 5, caractérisé en ce que la longueur optimale de la séquence de référence est encadrée par des bornes respectivement inférieure et supérieure ($P_M$, $P_m$) suivantes :

$$P_M = \sqrt[3]{\frac{3}{4}} \sqrt[3]{\frac{(k + 1)}{(\pi f_d T_s)^2} \frac{N_o}{2E_b}} \qquad\qquad P_m = \sqrt[3]{\frac{(k + 1)}{(\pi f_d T_s)^2} \frac{N_o}{2E_b}}$$

où :
- K est la longueur du canal,
- $T_s$ est la période symbole,
- No/2 est une densité bilatérale de bruit blanc additif gaussien,
- $E_b$ est l'énergie transmise par bit,
- $f_d$ est l'écart maximal de fréquence dû à l'effet Doppler.

FIG.1

FIG.3

FIG.2

**Office européen des brevets**

# RAPPORT DE RECHERCHE EUROPEENNE

Numero de la demande

EP 94 40 1645

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | CANADIAN JOURNAL OF ELECTRICAL AND COMPUTER ENGINEERING, vol.13, no.3-4, 1988, CANADA pages 106 - 111 G.W.DAVIDSON, D.D.FALCONER & A.U.H.SHEIKH 'AN INVESTIGATION OF BLOCK-ADAPTIVE DECISION FEEDBACK EQUALIZATION FOR FREQUENCY SELECTIVE FADING CHANNELS' * page 106, colonne de gauche, ligne 28 - colonne de droite, ligne 34 * * page 107, colonne de gauche, ligne 37 - page 108, colonne de droite, ligne 3 * * figure 1 * | 1 | H04B7/005 |
| A | DE-A-41 32 738 (AEG MOBILE COMMUNICATION) * page 2, ligne 34 - ligne 38 * * page 3, ligne 16 - ligne 25 * * figure 1 * | 1 | |
| A | IBM JOURNAL OF RESEARCH AND DEVELOPMENT, vol.27, no.5, Septembre 1983, NEW YORK US pages 426 - 431 A.MILEWSKI 'PERIODIC SEQUENCES WITH OPTIMAL PROPERTIES FOR CHANNEL ESTIMATION AND FAST START-UP EQUALIZATION' * page 429, colonne de gauche, ligne 11 - page 430, colonne de gauche, ligne 31 * | 1,3,4 | DOMAINES TECHNIQUES RECHERCHES (Int.Cl.6) H04B H04L |

Le présent rapport a été établi pour toutes les revendications

| Lieu de la recherche | Date d'achèvement de la recherche | Examinateur |
|---|---|---|
| LA HAYE | 31 Octobre 1994 | Lydon, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)